# EUROPÄISCHE PATENTSCHRIFT

(11) **EP 1 107 895 B1**
(45) Veröffentlichungstag und Bekanntmachung des Hinweises auf die Patenterteilung: **17.03.2004**
(21) Anmeldenummer: 99944568.7
(22) Anmeldetag: 01.09.1999
(51) Int. Cl.: B60T 8/36, B60G 17/033, F15B 13/00

(54) **DRUCKSTEUERGERÄT FÜR FAHRZEUGE**
PRESSURE CONTROL DEVICE FOR VEHICLES
DISPOSITIF DE COMMANDE DE LA PRESSION POUR VEHICULES

(30) Priorität: 02.09.1998 DE 19839843
(43) Veröffentlichungstag der Anmeldung: 20.06.2001
(73) Patentinhaber: KNORR-BREMSE Systeme für Nutzfahrzeuge GmbH, 80809 München (DE)
(72) Erfinder: HILBERER, Eduard, D-68766 Hockenheim (DE)
(86) Internationale Anmeldenummer: PCT/EP1999/006401
(87) Internationale Veröffentlichungsnummer: WO 2000/013950

(56) Entgegenhaltungen:
- EP-A- 0 580 382
- EP-A- 0 644 092
- EP-A- 0 803 652
- WO-A-98/07603
- DE-A- 4 232 586
- DE-A- 19 528 812
- DE-U- 9 415 078
- DE-U- 29 723 096

## Beschreibung

Die Erfindung betrifft ein Drucksteuergerät für Fahrzeuge mit einer Steuereinrichtung, einem mechanischen, pneumatischen und/oder hydraulischen Element und wenigstens einem Sensor gemäß dem Oberbegriff des Patentanspruchs 1.

Derartige Drucksteuergeräte sind zur Verwendung in Druckmittelanlagen, unter anderem von Fahrzeugen, vorgesehen. Diese können als pneumatische oder hydraulische Systeme ausgeführt sein, wobei hiermit Bremsanlagen, Niveauregulierungen usw. versorgt werden.

In der DE-A-44 45 125 ist ein Gehäuse für ein elektrisches Bauteil offenbart, das aus einem Gehäuseunterteil und einem Gehäuseoberteil besteht, die miteinander verbindbar sind. Ferner ist aus diesem Dokument ein Träger bekannt, der das im Gehäuse gelegene elektrische Bauteil trägt und entsprechende elektrische Anschlussmittel zur abgedichteten Verbindung des im Gehäuse gelegenen elektrischen Bauteils mit einem außerhalb des Gehäuses gelegenen elektrischen Bauteil aufweist. Eine derartige Vorrichtung hat zwar bei einer modularen Bauweise Vorteile, ist allerdings nur unter großem Zeitaufwand mit den weiteren Bauelementen, wie beispielsweise Sensoren und Aktoren, zu montieren. Zudem werden zusätzliche relativ lange Kabel zur Verbindung von Sensoren und Aktoren mit dem Steuergerät benötigt und ferner zusätzliche Gehäuse für die Sensoren und Aktoren zum Schutz gegen Umwelteinflüsse. Außerdem sind aufwendige Beschaltungen bzw. Vorkehrungen zu treffen, um das bekannte Steuergerät von den leitungsgeführten Störungen der zusätzlichen Kabel zu schützen.

In der DE 42 32 586 A1 ist ein Drucksteuergerät gemäß dem Oberbegriff des Patentanspruchs 1 offenbart. Der Drucksensor ist hierbei auf einer Platine integriert und stößt mit seinem Schaft durch die Platine, so dass dieser mit seinem Fühler in eine Arbeitskammer hineinragt. Bei etwaigen Beaufschlagungen des Sensors mit Druck wird die Platine durch entsprechende Kräfte beansprucht.

Es ist daher Aufgabe der vorliegenden Erfindung, ein Drucksteuergerät mit einer Steuereinrichtung, einem mechanischen, pneumatischen und/oder hydraulischen Element und wenigstens einem Sensor anzugeben, das eine Verbindung des Steuergerätes mit Sensoren, Aktoren und weiteren Elementen vorsieht, die nur wenig Material benötigen und die eine schnelle Montage möglich machen und somit Zeit und Kosten sparen.

Diese Aufgabe wird dadurch gelöst, dass ein bekanntes Drucksteuergerät dadurch weitergebildet wird, dass der wenigstens eine Sensor in der wenigstens einen Aussparung oder dem wenigstens einen Loch bewegbar angeordnet ist.

Durch diese erfindungsgemäße Maßnahme wird nämlich das mechanische, pneumatische und/oder hydraulische Element in unmittelbare Nähe von der Steuereinrichtung gebracht, so dass die Kabellängen kurz gehalten werden können. Außerdem wirkt so keine Druckkraft auf die Platine der Steuereinrichtung, so dass diese geschont wird. Durch die Maßnahme, dass das mechanische, pneumatische und/oder hydraulische Element ein Drucksteuergerät umfasst, wird auch die Montagezeit verringert, da nunmehr am Fahrzeug nur noch ein Bauteil bzw. das Drucksteuergerät im wesentlichen allein montiert werden muss und nicht, wie vorher, wenigstens zwei Bauteile unter zusätzlicher Anbringung von weiteren Kabeln. Hierdurch werden auch Materialkosten gespart, da nur wenige Behältnisteile benötigt werden, um die jeweiligen Bauteile vor Umwelteinflüssen zu schützen.

Wenn vorzugsweise wenigstens ein Sensor im Behältnis angeordnet ist, ist es möglich, das Steuergerät mit den Sensoren als einfache Baugruppe zu kalibrieren und zu testen. Wenn vorzugsweise im Bereich der Sensoren Aussparungen oder Löcher im mechanischen, pneumatischen und/oder hydraulischen Element und/ oder in der Steuereinrichtung vorgesehen sind, können die Sensoren in die unmittelbare Nähe der Bauelemente der Steuereinrichtung gebracht werden, so dass lange Kabellängen vermieden werden können. Vorzugsweise sind die Löcher oder Aussparungen an den zueinander gewandten Seiten des Elements und der Steuereinrichtung ausgebildet.

Die erfindungsgemäß verwandte Steuereinrichtung ist eine elektrische und/oder mechanische Steuereinrichtung. Vorzugsweise umfasst die Steuereinrichtung eine Platine, die mit Aussparungen oder Löchern für die Sensoren versehen ist. Auf diese Weise ist eine noch kompaktere Bauweise und schneller zu montierende Bauweise möglich.

Weiter vorzugsweise umfasst das Drucksteuergerät ein Behältnis mit einem ersten und einem zweiten Behältnisteil, wobei die Behältnisteile miteinander verbindbar sind und wobei das erste Behältnisteil mit dem zweiten Behältnisteil für wenigstens die Steuereinrichtung eine im wesentlichen geschlossene Kammer bildet. Durch diese Maßnahme ist eine einfache Montage möglich und ferner ein einfacher Schutz vor Umwelteinflüssen für die Steuereinrichtung und weitere Bauteile, wie insbesondere elektrische Bauteile.

Die Verbindbarkeit des ersten und zweiten Behältnisteils ist vorzugsweise lösbar fest. Je nach Einsatzgebiet sind Dichtungen vorgesehen, die den Behältnisinnenraum vor Wasser oder Verschmutzungen oder dergleichen schützen. Es sind ferner vorzugsweise Verbindungen mechanischer oder elektrischer Art vorgesehen, die den Innenbereich des Behältnisses mit dem Außenbereich verbindbar gestalten.

Vorzugsweise ist das mechanische, pneumatische und/oder hydraulische Element das zweite Behältnisteil. Durch diese Maßnahme kann weiter Material eingespart werden.

Vorzugsweise ist das hydraulische Element ein Ventilblock. Auf diese Art und Weise ist es möglich, ein Ventilblock mit dazugehörigem Steuergerät als eine einzige Baugruppe zu verwenden.

Vorzugsweise ist das zweite Behältnisteil ein Steuerventilblock für die Druckluftanlage eines Fahrzeuges.

Wenn vorzugsweise ein biegesteifes Element vorgesehen ist, können sonst auf das Behältnis wirkende Kräfte ohne Beschädigung des Behältnisses oder der Steuereinrichtung kompensiert werden.

Vorzugsweise ist das biegesteife Element ein Behältnisteil. Ferner vorzugsweise ist das biegesteife Element mit einem Behältnisteil verbindbar.

Sofern das biegesteife Element zum Aufnehmen der Druckkräfte von den Sensoren vorgesehen ist, wird die Steuereinrichtung mechanisch geschont. Wenn beispielsweise vorzugsweise die Steuereinrichtung eine Leiterplatine umfasst, kommt es durch die Aufnahme der Kräfte durch das biegesteife Element nicht zu Haarrissen auf der Platine, da diese aufgrund der Krafteinwirkung auf das biegesteife Element nicht verbogen wird.

Vorzugsweise findet die Steuerung und die Signalverarbeitung der Sensoren und/oder von Aktoren in der Steuereinrichtung statt.

Vorzugsweise ist in der Steuereinrichtung wenigstens ein Verstärker vorgesehen, der die Signale der Sensoren verstärkt. Vorzugsweise ist eine aktive und/oder passive Kühlung der Verstärker bzw. entsprechender Leistungshalbleiter vorgesehen. Diese Kühlung findet vorzugsweise über Kühlbleche und einen Teil des Behäitnisaußenteils statt.

Sofern vorzugsweise die Verstärker in unmittelbarer oder mittelbarer Nachbarschaft zu den zuordenbaren Sensoren angeordnet sind, können die Verbindungen zu den Verstärkern kurz gehalten werden, so dass wenige äußere Störungen in diese Kabel gelangen können. Sofern die elektrische Verbindung zwischen Sensor und Steuereinrichtung wenigstens teilweise über flexible Leitungen bzw. eine flexible Leitung geschieht, sind die Sensoren bzw. Aktoren in Bezug auf die Steuereinrichtung bewegbar, ohne dass die Verbindung zur Steuereinrichtung ermüdet und zerstört werden würde.

Vorzugsweise ist im Drucksteuergerät ein Speicherelement vorgesehen. Weiter vorzugsweise sind die Kalibrierwerte der Sensoren und/oder Regelparameter oder Steuerparameter der Steuereinrichtung in dem Speicherelement speicherbar. Diese Maßnahme hat den Vorteil, dass keine externen Speicherelemente benötigt werden, so dass auch weitere längere Kabel vermieden werden.

Vorzugsweise sind die Sensoren in einem Bereich zwischen den beiden Behältnisteilen angeordnet. Weiter vorzugsweise sind die Sensoren von den beiden Behältnisteilen gehalten. Durch diese Maßnahme können vorzugsweise weitere Halteelemente gespart werden und eine Montage ist entsprechend vereinfacht.

Wenn vorzugsweise wenigstens eine Dichtung vorgesehen ist, die die Sensoren und/oder Aktoren abdichtet, wird ein Austritt des Druckmittels aus der Druckmittelausgangsbohrung, beispielsweise eines Ventilblocks, vermieden. Je nach Ausführungsform der vorliegenden Erfindung können unterschiedliche Dichtungen verwandt werden, die auf unterschiedliche Art und Weise zur Abdichtung führen. Vorzugsweise ist die Dichtung zwischen dem Druckanschluss des zweiten Behältnisteils und dem Sensor vorgesehen. Durch diese Maßnahme ist lediglich eine einzige Dichtung nötig. Außerdem kann durch diese Maßnahme durch entsprechend feste oder lose Montage eines Bauteils, das auf den Sensor drückt, wie beispielsweise das erste Gehäuseteil oder das biegesteife Element, der Andruck auf die Dichtung nach den Bedürfnissen bzw. Druckverhältnissen, verwandten Materialien, Umwelteinflüssen und dergleichen angepasst werden.

Vorzugsweise ist der Sensor topfförmig. Weiter vorzugsweise ist der Sensor über den Rand des Topfbodens von einem Behältnisteil gehalten oder geführt. Durch diese Maßnahme ist eine gute Einpaßbarkeit der topfförmigen Sensoren gegeben. Bei entsprechenden Druckvariationen kommt es hierdurch nicht zu entsprechenden Druckmittelleckagen an dieser Verbindung von dem Druckmittel zur Steuereinrichtung.

Wenn vorzugsweise die Sensormembran am Topfboden ausgebildet ist, ist diese vor entsprechenden Beschädigungen durch eine nicht ganz sachgemäße Montage geschützt.

Die Erfindung wird nachstehend ohne Beschränkung des allgemeinen Erfindungsgedankens anhand von Ausführungsbeispielen unter Bezugnahme auf die Zeichnungen exemplarisch beschrieben, auf die im übrigen bezüglich der Offenbarung aller im Text nicht näher erläuterten erfindungsgemäßen Einzelheiten ausdrücklich verwiesen wird. Es zeigen:
- Fig. 1: eine erfindungsgemäße Ausführungsform eines Behältnisses in schematischer Darstellung,
- Fig. 2: eine weitere erfindungsgemäße Ausführungsform eines Behältnisses in schematischer Darstellung,
- Fig. 3: eine schematische Darstellung einer Einpassung eines Sensors auf einem Ventilblock in schematischer und vergrößerter Darstellung und
- Fig. 4: eine schematische Darstellung einer weiteren Einpassung eines Sensors auf einen-Ventilblock.

In den folgenden Figuren sind jeweils gleiche oder entsprechende Teile mit denselben Bezugszeichen bezeichnet, so dass auf eine erneute Vorstellung verzichtet wird und lediglich die Abweichungen der in diesen Figuren dargestellten Ausführungsbeispiele gegenüber dem ersten Ausführungsbeispiel erläutert werden.

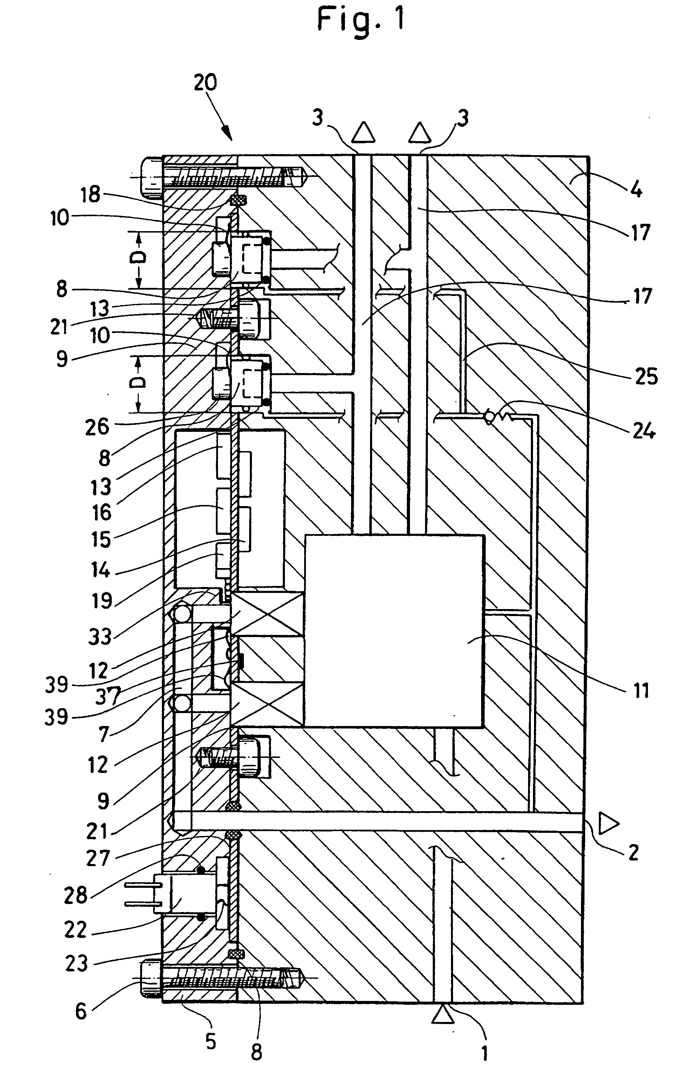

Fig. 1 stellt eine erste Ausführungsform des erfindungsgemäßen Drucksteuergeräts in schematischer Darstellung dar. Im Rahmen dieser Erfindung umfasst der Begriff Drucksteuergerät auch Druckregelgerät. In Fig. 1 ist speziell ein Steuergerätedeckel 5 gezeigt, der mit einem Gehäuseunterteil 4 über Schrauben 6 verbunden ist. Das Drucksteuergerät umfasst das durch das Gehäuseunterteil und den Steuergerätedeckel gebildete Behältnis. In diesem ist ein Steuergerät 20 angeordnet. Das Gehäuseunterteil 4 ist ein Ventilblock. Der Ventilblock weist einen Druckmittelzufuhranschluss 1, ein Druckmittelrücklaufanschluss 2 und Ausgangsanschlüsse 3 auf. Die Ausgangsanschlüsse 3 sind mit einer Druckmittelausgangsbohrung 17 verbunden. Ferner ist im Ventilblock eine mechanische Steuer- und Regeleinheit 11 vorgesehen, die mit Magnetventilen 12 verbunden ist. Es sind ferner Aussparungen in dem Ventilblock vorgesehen, in die die Steuergeräteschraubenköpfe 21 einpaßbar sind und Drucksensoren 8. Die mechanische Steuer- und Regeleinheit ist ferner verbunden mit einer Bohrung, die zu einem Rückschlagventil 24 führt, das mit einer Entlastungsbohrung 25 der Drucksensoren 8 verbunden ist.

Das Steuergerät 20 ist mittels Steuergeräteschrauben 21 an dem Steuergerätedeckel 5 befestigt.

Die Bauelemente des Steuergeräts 20 sind auf einer Leiterplatte 27 angeordnet. In der Leiterplatte 27 sind Löcher vorgesehen, die zur Aufnahme der Steuergeräteschrauben 21, der Sensoren 8 und der Magnetventile 12 jeweils wenigstens teilweise vorgesehen sind. Oberhalb der Bohrungen für die Sensoren sind im Steuergerätedeckel 5 Aussparungen vorgesehen, die einen Entlastungsraum 26 darstellen. Die Löcher in der Leiterplatte können auch als Leiterplattendurchbruch 9 bezeichnet werden, die für die Sensoren einen Durchmesser D aufweisen. Die Signale von und zu den Sensoren 8 werden über flexible Leitungen 10 zur Leiterplatte bzw. den Bauelementen des Steuergerätes, die insbesondere auf der Leiterplatte angeordnet sind, weitergegeben. Diese Bauelemente sind beispielsweise Mikrokontroller 14, Instrumentenverstärker 15, elektrisch beschreib- und lesbare bzw. überschreibbare Speicher (wie beispielsweise EE oder Flash ROM) 16 oder Leistungshalbleiter 19.

Ferner sind im Steuergerätedeckel 5 Magnetventilentlüftungen 7 vorgesehen. Zur Abdichtung beispielsweise der Druckluft sind Dichtelemente 13 vorgesehen. Zur Kommunikation mit dem außenliegenden Bereich, insbesondere zum Leiten von elektrischen oder elektronischen Signalen von und zu dem Steuergerät, ist ein Stecker 22 mit einer Steckerleitung 23 vorgesehen.

Um das Steuergerät vor Umwelteinflüssen, wie beispielsweise Dreck und Wasser und dergleichen, zu schützen, sind Dichtelemente wie eine Steuergerätedeckeldichtung und eine Steckerdichtung 28 vorgesehen.

Die Fig. 1 zeigt ein Ausführungsbeispiel als Mehrkanaldruckregelventil. Das ausgeführte Beispiel der Erfindung besteht aus einem Ventilblock 4, der einen Druckmittelzufuhranschluss 1, einen Druckmittelausgangsanschluss 3 und einen zentralen Druckmittelrücklaufanschluss 2 aufweist, der bei einem Pneumatikventil einer Entlüftung gleichzusetzen ist. Die mechanische Steuer- und Regeleinheit 11 übernimmt Signalverstärkungsfunktionen und bestimmt das Backupregelverhalten des Ventils bei Stromausfall.

Die Entlastungsbohrung 25 der in diesem Beispiel verwendeten Relativdrucksensoren 8 ist mit dem Rückschlagventil 24 verbunden. Damit ist es möglich, durch Temperaturschwankungen hervorgerufene Druckanstiege im Entlastungsraum 26 zum zentralen Druckmittelrücklauf abzubauen. Der Druckaufbau im Entlastungsraum infolge Dichtungsleckagen kann so auch abgebaut werden. Das Rückschlagventil verhindert das Eindringen von Druckstößen vom Druckmittelrücklauf 2 in den Entlastungsraum 26.

Die elektrischen Anschlüsse, also insbesondere die Spannungsversorgung und das Ausgangssignal der Drucksensoren 8, werden mit einer flexiblen Leitung 10 auf das elektrische bzw. elektronische Steuergerät 20 geführt. Das Ausgangssignal der Drucksensoren wird vom Instrumentenverstärker 15 verstärkt, bevor es vom Prozessor verarbeitet wird.

Bei der Erstinbetriebnahme des Steuergeräts werden zwei definierte Drücke auf die Drucksensoren gegeben und die gemessenen zugehörigen Ausgangssignalwerte, die von der Steuereinrichtung weiterverarbeitet wurden, in einem elektrisch schreibund löschbaren bzw. elektrisch überschreibbaren Speicher abgespeichert. Damit ist es möglich, kostengünstige nicht abgeglichene Relativdrucksensoren einzusetzen und diese zu kalibrieren.

Die Wärme der Leistungshalbleiter wird über ein aufgebrachtes wärmeleitendes Material 33 in den Steuergerätedeckel übertragen, um ein Überhitzen zu verhindern.

Die Magnetventile 12 sind ebenfalls am Steuergerät angebracht und deren elektrische Anschlüsse sind ebenfalls mit einer flexiblen Leitung aufs Steuergerät geführt.

Der Stecker 22 ist mit der elektrischen Leitung 23 mit dem Steuergerät 20 verbunden. Der Stecker 22 wird mit dem Dichtelement 27 zum Gehäusedeckel 5 abgedichtet. Der Gehäusedeckel 5 ist mit der Dichtung 18 zum Ventilblock 4 abgedichtet. Der Gehäusedeckel 5 ist mit den Deckelschrauben 6 auf den Ventilblock geschraubt. Der Ventilblock 4 stellt das Behältnisunterteil dar. Durch diese Bauweise ist eine sehr kompakte und einfach zu montierende Ausgestaltung eines Behältnisses möglich, in das sowohl eine Steuereinrichtung als auch ein mechanisches, pneumatisches und/oder hydraulisches Element, wie beispielsweise ein Ventilblock oder Zylinderblock, integriert sind. Es sind ferner flexible Leitungen 39 vorgesehen.

Der Gehäusedeckel 5 ist in Fig. 1 so biegesteif ausgeführt, dass dieser auf ihn wirkende Kräfte aufnimmt und weiterleitet, ohne dass dieser sich wesentlich verwindet oder sogar beschädigt wird. Die auf die Drucksensoren wirkenden Druckkräfte werden so in den Ventilblock zurückgeleitet. Die Drucksensoren werden nämlich vom Gehäusedeckel 5 niedergehalten.

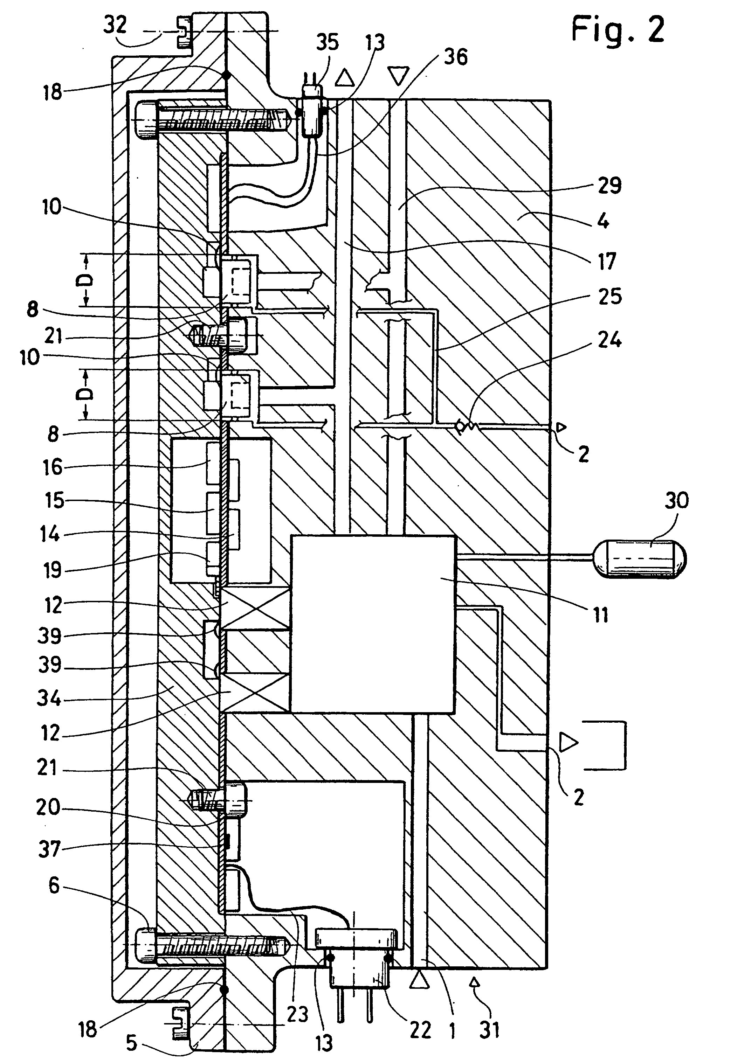

Das in Fig. 2 dargestellte erfindungsgemäße Ausführungsbeispiel zeigt einen zusätzlichen Druckluftspeicher und einen Messanschluss für externe Drücke. Die Möglichkeit, externe Drücke zu messen, geschieht über den Messanschluss 29. Dieses ist bei Load Sensing Ventilfunktionsweisen erforderlich. Außerdem ist, wie eben schon dargestellt, ein zusätzlicher Druckmittelspeicher 30 vorhanden, so dass das Ventil auf hohe Druckanforderungen schnell reagieren kann, indem Druckmittel aus diesem Speicher entnommen werden. Ein weiterer Vorteil dieser Ausführung liegt in der Möglichkeit, externe Steuerdrücke durch den Steueranschluss 31 aufzunehmen.

Insbesondere bei engen Raumverhältnissen bzw. engen Einbauverhältnissen ist es von Vorteil, wenn der Stecker 22 im Gehäuseunterteil angeordnet ist.

Es ist ferner ein biegesteifes Bauteil 34 vorgesehen, das nicht identisch mit dem Gehäusedeckel 5 ist. Durch die Maßnahme kann insbesondere bei einem großen Deckel der Deckel kostengünstig aus Kunststoff ausgeführt werden, ohne dass die jeweils wirkenden Kräfte den Deckel beschädigen könnten. Das biegesteife Bauteil 34 kann örtlich begrenzt und klein ausgeführt werden uns insbesondere mit dem Gehäuseunterteil, also in diesem Beispiel dem Ventilblock, verbunden sein. In diesem Ausführungsbeispiel wird der Gehäusedeckel mit zusätzlichen Deckelschrauben 32 auf das Gehäuseunterteil geschraubt.

Außerdem ist ein weiterer Stecker 35 dargestellt, der es ermöglicht, externe Signale aufzunehmen und zu verarbeiten bzw. weiterzugeben.

Es ist also insbesondere auch eine Steuerbehältnisbauweise vorgestellt worden, der die folgenden Merkmale jeweils einzeln oder in Verbindung teilweise oder ganz miteinander erfüllt sind. Das Behältnisunterteil ist ein Ventilblock. Der Ventilblock verfügt über einen Druckmittelzufuhranschluss und zumindest einen Druckmittelausgangsanschluss. Der Druck in der Druckmittelausgangsbohrung wird durch einen Drucksensor gemessen. Ein Mikrokontroller vergleicht den Druck in der Druckmittelausgangsbohrung mit abgespeicherten Druckwerten und regelt entsprechend mit einem elektrisch gesteuerten Stellglied nach. Eine mechanische Steuer- und Regeleinheit ist vorhanden, die Druck-, Steuer- und Notlaufeigenschaften bei Spannungsausfall bestimmt. Ein Druckmittelrücklaufanschluss ist vorgesehen, der bei einem pneumatischen Einsatz einer Entlüftung entspricht. Ferner ist ein elektrisches Steuergerät vorgesehen, das zumindest einen Leistungshalbleiter 19, einen Mikrokontroller 14 und einen beschreibbaren Datenspeicher 16 aufweist. Die Leiterplatte des elektrischen Steuergerätes ist im Bereich der Sensoren mit einem Durchbruch versehen, durch welchen die Sensoren geführt und/oder niedergehalten werden. Die auf den Sensoren wirkenden Druckkräfte werden durch ein biegesteifes Bauteil, das mit dem Ventilblock verbunden ist, kompensiert. Das Sensorsignal wird von auf der Leiterplatte befindlichen Verstärkern verstärkt. Die elektrische Versorgung des Sensor und das elektrische Ausgangssignal des Sensors wird mit einer flexiblen Leitung auf die Leiterplatte übertragen. Die Kalibrierwerte der Sensoren und die Regelparameter des Steuergerätes werden in dem Speicher abgelegt.

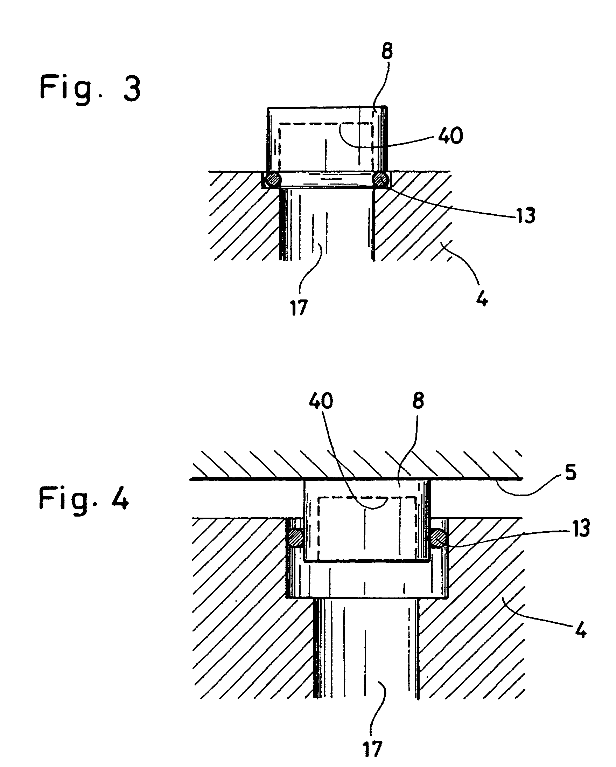

In Fig. 3 zeigt eine Einpassung eines Sensors 8 in den Ventilblock 4 bzw. zwischen dem Ventilblock 4 und dem Steuergerätedeckel, der in Fig. 3 allerdings nicht dargestellt ist. Durch Ausüben eines Drucks mittels des Steuergerätedeckels 5 auf den Sensor 8 wird der Sensor 8 nach unten gedrückt, so dass die Dichtung 13 sich in der vertikalen Ausdehnung verringert. Mittels dieses Drucksensors wird der Druckmitteldruck in der Druckmittelsausgansbohrung 17 über die Sensormembran gemessen. Die gemessenen Werte werden dann in dem Steuergerät 20, das in der Nähe angeordnet ist und nicht dargestellt ist, weiter verarbeitet. Die Ausführung nach Fig. 3 ist nicht von der Erfindung umfasst.

Fig. 4 zeigt eine andere Einpassmöglichkeit des Drucksensors 8 auf die Druckmittelausgangsbohrung 17. Die Dichtungen sind hier seitlich von dem Drucksensor, der vorzugsweise topfförmig ausgebildet ist, angeordnet. Es handelt sich hierbei also bevorzugt um eine radiale Dichtung. Die Ausdehnung bzw. die Bewegung des Sensors nach oben hin ist durch den Steuergerätedeckel 5 begrenzt.

### Bezugszeichenliste

- 1.: Druckmittelzufuhranschluss
- 2.: Druckmittelrücklaufanschluss
- 3.: Ausgangsanschluss
- 4.: Gehäuseunterteil (Ventilblock)
- 5.: Steuergerätedeckel
- 6.: Schraube
- 7.: Magnetventilentlüftung
- 8.: Drucksensor
- 9.: Leiterplattendruchbruch
- 10.: flexible Leitung
- 11.: mechanische Steuer- und Regeleinheit
- 12.: Magnetventil
- 13.: Dichtelement
- 14.: Mikrokontroller
- 15.: Instrumentenverstärker
- 16.: elektrisch beschreib- und lesbarer bzw. überschreibbarer Speicher (z. B. EE oder Flash ROM)
- 17.: Druckmittelausgangsbohrung
- 18.: Steuergerätedeckeldichtung
- 19.: Leistungshalbleiter
- 20.: Steuergerät
- 21.: Steuergeräteschraube
- 22.: Stecker
- 23.: Steckerleitung
- 24.: Rückschlagventil
- 25.: Entlastungsbohrung
- 26.: Entlastungsraum
- 27.: Leiterplatte
- 28.: Steckerdichtung
- 29.: Messanschluss
- 30.: Druckmittelspeicher
- 31.: Steueranschluss
- 32.: Deckelschraube
- 33.: wärmeleitendes Material
- 34.: biegesteifes Bauteil
- 35.: Stecker
- 36.: Signalleitung
- 39.: flexible Leitung
- 40.: Sensormembran

## Patentansprüche

1. Drucksteuergerät für Fahrzeuge mit einer Steuereinrichtung (20), einem mechanischen, pneumatischen und/oder hydraulischen Element (4) und wenigstens einem Sensor (8), wobei die Steuereinrichtung (20) eine Platine (27) umfasst, die wenigstens eine Aussparung oder wenigstens ein Loch (9) für den wenigstens einen Sensor (8) aufweist, in das der wenigstens eine Sensor (8) wenigstens teilweise aufnehmbar ist, **dadurch gekennzeichnet, dass** der wenigstens eine Sensor (8) in der wenigstens einen Aussparung oder dem wenigstens einen Loch (9) bewegbar angeordnet ist.

2. Drucksteuergerät nach Anspruch 1, **dadurch gekennzeichnet, dass** das Steuergerät ein Behältnis mit einem ersten und einem zweiten Behältnisteil (4,5) umfasst, wobei die Behältnisteile (4, 5) miteinander verbindbar sind und wobei das erste Behältnisteil (5) mit dem zweiten Behältnisteil (4) für wenigstens die Steuereinrichtung (20) eine im wesentlichen geschlossene Kammer bildet.

3. Drucksteuergerät nach Anspruch 2, **dadurch gekennzeichnet, dass** das mechanische, pneumatische und/oder hydraulische Element das zweite Behältnisteil ist.

4. Drucksteuergerät nach einem oder mehreren der Ansprüche 1 bis 3 **dadurch gekennzeichnet, dass** das hydraulische Element (4) ein Ventilblock ist.

5. Drucksteuergerät nach einem oder mehreren der Ansprüche 1 bis 3, **dadurch gekennzeichnet, dass** das zweite Behältnisteil (4) ein Steuerventilblock für die Druckluftanlage eines Fahrzeuges ist.

6. Drucksteuergerät nach einem oder mehreren der Ansprüche 1 bis 5, **dadurch gekennzeichnet, dass** ein biegesteifes Element vorgesehen ist.

7. Drucksteuergerät nach Anspruch 6, **dadurch gekennzeichnet, dass** das biegesteife Element (34) ein Behältnisteil (4, 5) ist.

8. Drucksteuergerät nach Anspruch 6, **dadurch gekennzeichnet, dass** das biegesteife Element (34) mit einem Behältnisteil (4, 5) verbindbar ist.

9. Drucksteuergerät nach einem oder mehreren der Ansprüche 6 bis 8, **dadurch gekennzeichnet, dass** das biegesteife Element (34) zum Aufnehmen der Druckkräfte von dem wenigstens einen Sensor (8) vorgesehen ist.

10. Drucksteuergerät nach einem oder mehreren der Ansprüche 1 bis 9, **dadurch gekennzeichnet, dass** die Signalverarbeitung des wenigstens einen Sensors (8) in der Steuereinrichtung (20) stattfindet.

11. Drucksteuergerät nach einem oder mehreren der Ansprüche 1 bis 10, **dadurch gekennzeichnet, dass** in der Steuereinrichtung (20) Verstärker (15, 19) vorgesehen sind, die die Signale des wenigstens einen Sensors (8) verstärken.

12. Drucksteuergerät nach Anspruch 11, **dadurch gekennzeichnet, dass** die Verstärker (15, 19) in unmittelbarer oder mittelbarer Nachbarschaft zu dem wenigstens einen Sensor (8) angeordnet sind.

13. Drucksteuergerät nach einem oder mehreren der Ansprüche 1 bis 12, **dadurch gekennzeichnet, dass** die elektrische Verbindung (10) zwischen Sensor (8) und Steuereinrichtung (20) wenigstens teilweise über flexible Leitungen (10) geschieht.

14. Drucksteuergerät nach einem oder mehreren der Ansprüche 1 bis 13, **dadurch gekennzeichnet, dass** im Drucksteuergerät ein Speicherelement (16) vorgesehen ist.

15. Drucksteuergerät nach Anspruch 14, **dadurch gekennzeichnet, dass** Kalibrierwerte des wenigstens einen Sensors (8) und/oder Regelparameter oder Steuerparameter der Steuereinrichtung (20) in dem Speicherelement (16) speicherbar sind.

16. Drucksteuergerät nach einem oder mehreren der Ansprüche 2 bis 15, **dadurch gekennzeichnet, dass** der wenigstens eine Sensor (8) in einem Bereich zwischen den beiden Behältnisteilen (4, 5) angeordnet ist.

17. Drucksteuergerät nach Anspruch 16, **dadurch gekennzeichnet, dass** der wenigstens eine Sensor (8) von den beiden Behältnisteilen (4, 5) gehalten ist.

18. Drucksteuergerät nach einem oder mehreren der Ansprüche 1 bis 17, **dadurch gekennzeichnet, dass** wenigstens eine Dichtung (13) vorgesehen ist, die den wenigstens einen Sensor (8) abdichtet.

19. Drucksteuergerät nach Anspruch 18, **dadurch gekennzeichnet, dass** die Dichtung zwischen dem Druckanschluss des zweiten Behältnisteils (4) und dem Sensor (8) vorgesehen ist.

20. Drucksteuergerät nach einem oder mehreren der Ansprüche 1 bis 19, **dadurch gekennzeichnet, dass** der Sensor (8) topfförmig ausgebildet ist.

21. Drucksteuergerät nach Anspruch 20, **dadurch gekennzeichnet, dass** der Sensor (8) über den Rand des Topfbodens von einem Behältnisteil gehalten oder geführt ist.

22. Drucksteuergerät nach Anspruch 20 und/oder 21, **dadurch gekennzeichnet, dass** eine Sensormembran (40) am Topfboden ausgebildet ist.

## Claims

1. Pressure control device for vehicles, comprising a control system (20), a mechanical, pneumatic and/or hydraulic element (4) and at least one sensor (8), the control system (20) having a printed circuit board (27) with at least one recess or at least one orifice (9) for the at least one sensor (8), in which the at least one sensor (8) can be at least partially accommodated, **characterised in that** the at least one sensor (8) in the at least one recess or the at least one orifice (9) is displaceable.

2. Pressure control device as claimed in claim 1, **characterised in that** the control device comprises a container with a first and a second container part (4, 5), which container parts (4, 5) can be joined to one another, the first container part (5) in conjunction with the second container part (4) constituting a substantially closed chamber for at least the control system (20).

3. Pressure control device as claimed in claim 2, **characterised in that** the mechanical, pneumatic and/or hydraulic element is the second container part.

4. Pressure control device as claimed in one or more of preceding claims 1 to 3, **characterised in that** the hydraulic element (4) is a valve block.

5. Pressure control device as claimed in one or more of preceding claims 1 to 3, **characterised in that** the second container part (4) is a control valve block for the air compression system of a vehicle.

6. Pressure control device as claimed in one of claims 1 to 5, **characterised in that** a bending resistant element is provided.

7. Pressure control device as claimed in claim 6, **characterised in that** the bending resistant element (34) is a container part (4, 5).

8. Pressure control device as claimed in claim 6, **characterised in that** the bending resistant element (34) can be joined to a container part (4, 5).

9. Pressure control device as claimed in one or more of claims 6 to 8, **characterised in that** the bending resistant element (34) is provided as a means of deflecting pressure forces from the at least one sensor (8).

10. Pressure control device as claimed in one or more of claims 1 to 9, **characterised in that** signal processing of the at least one sensor (8) takes place in the control system (20).

11. Pressure control device as claimed in one or more of the preceding claims, **characterised in that** amplifiers (15, 19) are provided in the control system (20) which amplify the signals of the at least one sensor (8).

12. Pressure control device as claimed in claim 11, **characterised in that** the amplifiers (15, 19) are disposed in the direct or indirect vicinity of the at least one sensor (8).

13. Pressure control device as claimed in one or more of claims 1 to 12, **characterised in that** the electrical connection (10) between sensor (8) and control system (20) is at least partially provided in the form of flexible wires (10).

14. Pressure control device as claimed in one or more of claims 1 to 13, **characterised in that** a memory element (16) is provided in the pressure control device.

15. Pressure control device as claimed in claim 14, **characterised in that** calibration values of the at least one sensor (8) and/or automatic control parameters or control parameters of the control system (20) can be stored in the memory element (16).

16. Pressure control device as claimed in one or more of claims 2 to 15, **characterised in that** the at least one sensor (8) is disposed in an area between the two container parts (4, 5).

17. Pressure control device as claimed in claim 16, **characterised in that** the at least one sensor (8) is retained by the two container parts (4, 5).

18. Pressure control device as claimed in one or more of claims 1 to 17, **characterised in that** at least one seal (13) is provided, which seals off the at least one sensor (8).

19. Pressure control device as claimed in claim 18, **characterised in that** the seal is disposed between the pressure port of the second container part (4) and the sensor (8).

20. Pressure control device as claimed in one or more of claims 1 to 19, **characterised in that** the sensor (8) is pot-shaped.

21. Pressure control device as claimed in claim 20, **characterised in that** the sensor (8) is retained or guided at the periphery of the pot base by means of a container part.

22. Pressure control device as claimed in claim 20 and/or 21, **characterised in that** a sensor membrane (40) is provided on the pot base.

## Revendications

1. Appareil de commande de pression pour des véhicules comprenant un dispositif (20) de commande, un élément (4) mécanique, pneumatique et/ou hydraulique et au moins un capteur (8), le dispositif (20) de commande comprenant une platine (27) qui a au moins un évidement ou au moins un trou (9) pour le au moins un capteur (8), dans lequel le au moins un capteur (8) peut être reçu au moins en partie, **caractérisé en ce que** le au moins un capteur (8) est monté mobile dans le au moins un évidement ou le au moins un trou (9).

2. Appareil de commande de pression suivant la revendication 1, **caractérisé en ce que** le dispositif de commande comprend un récipient ayant une première et une deuxième partie (4, 5) de récipient, les parties (4, 5) de récipient pouvant être assemblées entre elles, et dans lequel la première partie (5) de récipient forme avec la deuxième partie (4) de récipient une chambre sensiblement fermée pour au moins le dispositif (20) de commande.

3. Appareil de commande de pression suivant la revendication 2, **caractérisé en ce que** l'élément mécanique, pneumatique et/ou hydraulique est la deuxième partie du récipient.

4. Appareil de commande de pression suivant l'une ou plusieurs des revendications 1 à 3, **caractérisé en ce que** l'élément (4) hydraulique est un bloc de vanne.

5. Appareil de commande de pression suivant l'une ou plusieurs des revendications 1 à 3, **caractérisé en ce que** la deuxième partie (4) du récipient est un bloc de vanne de commande pour l'installation à air comprimé d'un véhicule automobile.

6. Appareil de commande de pression suivant l'une ou plusieurs des revendications 1 à 5, **caractérisé en ce qu'**il est prévu un élément rigide en flexion.

7. Appareil de commande de pression suivant la revendication 6, **caractérisé en ce que** l'élément (34) rigide en flexion est une partie (4, 5) du récipient.

8. Appareil de commande de pression suivant la revendication 6, **caractérisé en ce que** l'élément (34) rigide en flexion peut être relié à une partie (4, 5) du récipient.

9. Appareil de commande de pression suivant l'une ou plusieurs des revendications 6 à 8, **caractérisé en ce que** l'élément (34) rigide en flexion est prévu pour absorber les forces de pression du au moins un capteur (8).

10. Appareil de commande de pression suivant l'une ou plusieurs des revendications 1 à 9, **caractérisé en ce que** le traitement du signal du au moins un capteur (8) a lieu dans le dispositif (20) de commande.

11. Appareil de commande de pression suivant l'une ou plusieurs des revendications 1 à 10, **caractérisé en ce qu'**il est prévu dans le dispositif (20) de commande des amplificateurs (15, 19) qui amplifient les signaux du au moins un capteur (8).

12. Appareil de commande de pression suivant la revendication 11, **caractérisé en ce que** les amplificateurs (15, 19) sont disposés à proximité immédiate ou non immédiate du au moins un capteur (8).

13. Appareil de commande de pression suivant l'une ou plusieurs des revendications 1 à 12, **caractérisé en ce que** la liaison (10) électrique entre le capteur (8) et le dispositif (20) de commande s'effectue au moins en partie par des conducteurs (10) souples.

14. Appareil de commande de pression suivant l'une ou plusieurs des revendications 1 à 13, **caractérisé en ce qu'**il est prévu un élément (16) de mémoire dans le dispositif de commande de pression.

15. Appareil de commande de pression suivant la revendication 14, **caractérisé en ce que** des valeurs d'étalonnage du au moins un capteur et/ou des paramètres de régulation ou des paramètres de commande du dispositif (20) de commande peuvent être mémorisées dans l'élément (16) de mémoire.

16. Appareil de commande de pression suivant l'une ou plusieurs d es revendications 2 à 15, **caractérisé en ce que** le au moins un capteur (8) est disposé dans une zone comprise entre les deux parties (4, 5) du récipient.

17. Appareil de commande de pression suivant la revendication 16, **caractérisé en ce que** le au moins un capteur (8) est maintenu par les deux parties (4, 5) du récipient.

18. Appareil de commande de pression suivant l'une ou plusieurs des revendications 1 à 17, **caractérisé en ce qu'**il est prévu au moins une garniture (13) d'étanchéité qui rend étanche le au moins un capteur (8).

19. Appareil de commande de pression suivant la revendication 18, **caractérisé en ce que** la garniture d'étanchéité est prévue entre le raccord de pression de la deuxième partie (4) du récipient et le capteur (8).

20. Appareil de commande de pression suivant l'une ou plusieurs des revendications 1 à 19, **caractérisé en ce que** le capteur (8) a la forme d'un pot.

21. Appareil de commande de pression suivant la revendication 20, **caractérisé en ce que** le capteur (8) est maintenu ou guidé par le bord du fond du pot par une partie du récipient.

22. Appareil de commande de pression suivant la revendication 20 et/ou 21, **caractérisé en ce qu'**une membrane (40) de capteur est constituée sur le fond du pot.
